(19) Europäisches Patentamt

European Patent Office

Office européen des brevets

(11) **EP 3 712 047 A1**

(12) **EUROPEAN PATENT APPLICATION**

(43) Date of publication:
**23.09.2020 Bulletin 2020/39**

(51) Int Cl.:
**B62J 3/00** (2020.01)      **B62J 99/00** (2020.01)

(21) Application number: **19164293.3**

(22) Date of filing: **21.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Johnson, Patrick**
**Blackrock, County Dublin (IE)**

(72) Inventor: **Johnson, Patrick**
**Blackrock, County Dublin (IE)**

(74) Representative: **FRKelly**
**27 Clyde Road**
**Dublin D04 F838 (IE)**

(54) **A VEHICLE SECURITY SYSTEM**

(57)    The present disclosure relates to a vehicle security system. The system includes a sensor for sensing movement of a vehicle from an initial position; the sensor being in communication with an alarm mechanism for activating the alarm mechanism if the vehicle is moved beyond a predetermined threshold. The alarm mechanism is configured to provide a signal at a frequency substantially corresponding to a resonant frequency of at least a portion of the vehicle body.

Figure 5

## Description

## Field of the Invention

The present disclosure relates to a vehicle security system including an alarm mechanism associated with a sensor for sensing movement of a vehicle from an initial position, and a vehicle for accommodating said vehicle security system therein. In particular, the present disclosure relates to an alarm mechanism being configurable to generate, in response to the sensor sensing that the vehicle has been moved beyond a predetermined threshold, an alarm with a frequency equal to a resonant frequency of at least a portion of the vehicle body within which the vehicle security system may be accommodated.

## Background of the invention

Vehicle theft is a major problem globally. It is of particular concern for owners of single-track or lightweight vehicles such as bicycles, scooters and the like, which due to their relatively low mass and small dimensions require little effort to steal in comparison to large motor vehicles. Consequently, such vehicles attract particular attention from thieves. Typically, bicycle or scooter theft refers to the theft of the entire bicycle or scooter. Locks may be used to secure a bicycle or scooter to structures such as railings, lampposts, parking bays, etc. in an effort to deter thieves. However, thieves have the expertise to either break or 'pick' the locks thereby rendering such locks ineffective. Locks which are an appendage to a bicycle or scooter are particularly susceptible to being broken off as brute force can be used to remove them rather than specialised tools. Once such a lock has been removed, if there are no remaining traces of the appendage, it may not be obvious to an observer that there has been any tampering with any part of the vehicle or indeed that a lock was ever present on the vehicle.

There is therefore a need to provide a vehicle security system which addresses at least some of the drawbacks of the prior art.

## Summary of the Invention

The present disclosure provides a vehicle security system as detailed in claim 1, and a vehicle as detailed in claim 15 in which the vehicle security system may be accommodated. Advantageous features are provided in the dependent claims.

## Brief description of the drawings

Figure 1 is an illustration of a cross-section view of a bicycle accommodating a vehicle security system in communication with a remote device, according to an embodiment of the present disclosure;

Figure 2 is an illustration of an alarm circuit of a vehicle security system, according to an embodiment of the present disclosure;

Figure 3 is an illustration of isometric and cross-sectional views of a vehicle security system, according to an embodiment of the present disclosure;

Figure 4 is an illustration of isometric and cross-sectional views of a vehicle security system, according to an embodiment of the present disclosure;

Figure 5 is an illustration of a cross-section view of a vehicle security system in situ in an interior volume defined by a frame of a vehicle, according to an embodiment of the present disclosure;

Figure 6 is an illustration of a vehicle security system in situ in an interior volume defined by a frame of a vehicle, according to an embodiment of the present disclosure;

Figure 7 is an illustration of a cross-section view of a vehicle security system in situ in an interior volume defined by a frame of a vehicle, according to an embodiment of the present disclosure;

Figure 8 is an illustration of a process for installing a vehicle security system in an interior volume defined by a frame of a vehicle, according to an embodiment of the present disclosure; and

Figure 9 is an illustration of a process for installing a vehicle security system in an interior volume defined by a frame of a vehicle, according to an embodiment of the present disclosure.

## Detailed Description of the drawings

The present teaching will now be described with reference to an exemplary security system for a vehicle, and an exemplary vehicle for accommodating said vehicle security system. It will be understood that the exemplary security system and vehicle are provided to assist in an understanding of the present teaching and are not to be construed as limiting in any fashion. Furthermore, elements or components that are described with reference to any one Figure may be interchanged with those of other Figures or other equivalent elements without departing from the spirit of the present teaching. The term 'vehicle' will be understood in the exemplary embodiment to refer to a bicycle, however other similar vehicles such as a scooter or a unicycle and the like will be understood to be replaceable with the bicycle. It will be understood however that other vehicles are feasibly replaceable with any one of these single-track vehicles. For example, a motor vehicle such as a car or a motorcycle.

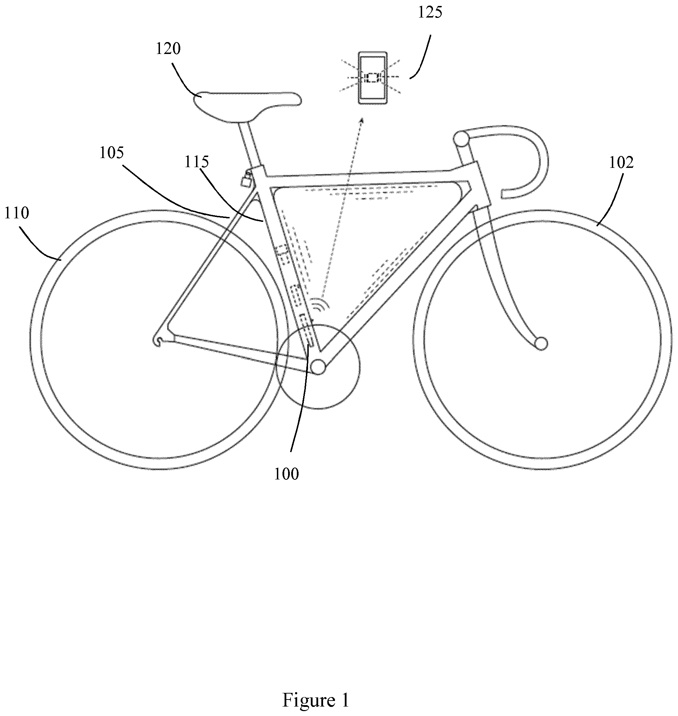

Referring now to the Figure 1 there is illustrated an exemplary vehicle security system 100 accommodated in an interior volume of a vehicle body - in the exemplary embodiment the frame 105 of a bicycle 102, said frame 105 being mounted on a pair of ground engaging wheels 110. The frame 105 includes a saddle supporting member 115 on which a saddle 120 may be mounted. The frame 105 is typically tubular in order to minimise the weight of the bicycle 102. The vehicle security system 100 is configured for being positioned in the interior volume of a vehicle body, such as the frame 105 of the bicycle 102 in the embodiment of Figure 1. As such, the saddle supporting member 115 defines a hollow interior volume of the frame 105 in which the vehicle security system 100 in accordance with the present teaching is mounted in the exemplary embodiment.

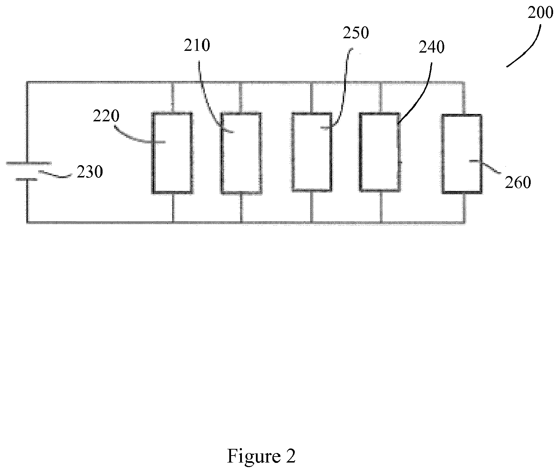

The frame 105 may be manufactured in a variety of ways. The frame 105 may be manufactured as one main frame comprising for example; a top tube section, a down tube section, a head tube section, a seat tube section (also know as a saddle support member 115 for the purposes of this specification), a seat stay section and a fork section. Alternatively, the frame may be manufactured as several independently manufactured items which are then bonded together to form one main frame. Manufacturing processes may include one or a combination of the following processes; bladder moulding, foam core moulding, roll wrapping, filament winding or other suitable bicycle frame manufacturing processes. The frame 105 may be made from carbon fibre, aluminium, carbon steel or any other suitable material which fulfils the essential design requirements of strength, weight and durability. The frame 105 material may also be selected in consideration of at least one resonant frequency it may possess - further discussion of this may be found in relation to Figure 2.

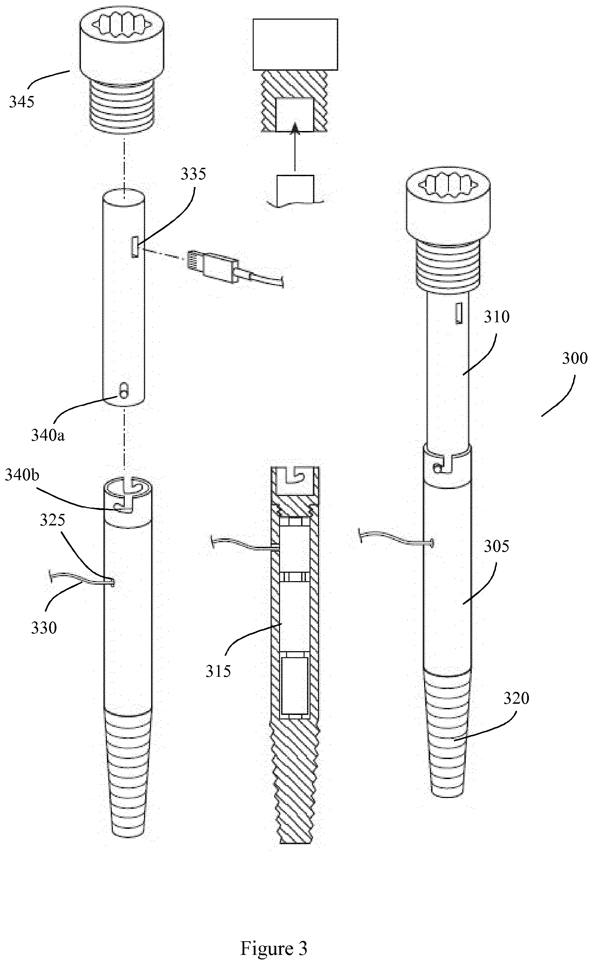

Regardless of the method of manufacturing, once the frame 105 has been manufactured into a one piece frame 105, each of the tubes sections (for example; top tube section, down tube section, head tube section, seat tube section, seat stay section, fork section, etc.) which make up the frame 105 are known as integral members of the frame 105 and these members are not designed to be changed/replaced in normal use of the bicycle 102 during the life of the bicycle 102. Other ancillary items which can be temporarily or semi permanently fixed to the integral members of the frame 105 (such as, but not limited to; wheels, handlebars, saddle, etc.) are known as temporary items and these items are specifically designed to be interchangeable, replaceable, removable etc. in normal use of the bicycle 102. Temporary items may be removed directly by the bicycle user without substantial hardship or intervention from a bicycle specialist. The vehicle security system 100 is designed to fit within one of the hollow integral members of the frame 105 in order to ensure that access to the vehicle security system 100 is restricted. The vehicle security system 100 is not designed to fit within one of the temporary items as this item could be removed and replaced and thus access to the vehicle security system 100 would not be sufficiently restricted. A security mechanism which may comprise a lock nut may be used to provide an additional layer of security against removal of the vehicle security system 100 - discussion of the security mechanism is presented in relation to Figures 3, 6, 7 and 8.

Also illustrated is a smart device 125, which may be a mobile device or other telecommunications device configured for transmitting and/or receiving wireless communications. In the exemplary embodiment, the alarm mechanism of the vehicle security system 100 may comprise a wireless communication interface for communicating with remote devices such as the smart device 125. The wireless communication interface may include but is not limited to a Bluetooth, or cellular transceiver, a satellite communication transmitter/receiver, an optical port and/or any other such, interfaces for wirelessly connecting the smart device 125 to a controller of an alarm circuit. The alarm circuit is best illustrated in Figure 2 of the present disclosure.

It will be understood that while Figure 1 and the preceding description has been presented in relation to a bicycle 102, an equivalent discussion could equally be presented for a scooter, a unicycle or the like, or another vehicle such as a car or a motorcycle. As such, the terms 'vehicle', 'bicycle', 'scooter', 'unicycle', 'car', 'motorcycle' and the like may be interchangeably used herein without departing from the spirit of the present disclosure.

Referring now to Figure 2, there is presented an illustration of an alarm circuit 200 of the vehicle security system 100 which may comprise a sensor 210 for sensing a predefined variable of the bicycle 102, said sensor in communication with an alarm mechanism 220. In some embodiments, the predefined variable is an angular position of the bicycle 102 with respect to an initial position, i.e. tilt. In some embodiments, the predefined variable is a spatial displacement of the bicycle 102 with respect to an initial position, i.e. according to Cartesian coordinates (x, y, z) or another appropriate coordinate system. The sensor 210 is in communication with the alarm mechanism 220 for activating the alarm mechanism 220 if the predefined variable of the vehicle 102 is greater than a predetermined threshold. In the exemplary embodiment, the sensor 210 is configured to be in communication with the alarm mechanism 220 for activating the alarm mechanism 220 if the vehicle 102 is displaced or reoriented beyond a predetermined threshold. In the exemplary embodiment, the alarm mechanism 220 may be configured to provide a signal at a frequency substantially corresponding to a resonant frequency of at least a portion of the vehicle 102, at least a portion of the vehicle 102 producing a high-pitched sound due to the resonance of said portion of the vehicle 102. The material of at least a portion of the frame 105 may be caused to resonate by sound waves or mechanical vibrations generated by the alarm circuit 200. A significant technical advantage of using the resonance of a vehicle 102 to generate an alarm signal is that it has the effect of amplifying the alarm signal generated by the alarm signal of the vehicle security system 100. Another significant technical advantage of using the resonance of a vehicle 102 to generate an alarm signal is the notable reduction in energy expended in an activated alarm situation, compared with conventional burglar alarm configurations. Conventional configurations expend a large portion of energy stored in batteries or the like when the alarm is activated, to produce a high frequency signal of the order of $10^8$ Hz. Material configurations which typically form the frame of a vehicle 102, such as carbon fibre or aluminium, have relatively low resonant frequencies of the order of $10^4$ Hz, a factor of 10,000 smaller in magnitude than the frequencies generated by conventional burglar alarms. Moreover, this is a particularly notable advantage when one considers that much higher frequencies (than are required for resonance of a portion of the frame 105) would be required for an alarm located inside the frame of a vehicle 102 to be widely audibly perceptible. During manufacture, the material(s) the frame 105 is made of and the mechanical/structural configuration of said material(s) may be selected for different desired resonant frequencies or range of desired resonant frequencies. For example, one might relate the Young's modulus - the ratio of material stress to strain - of a material to its resonant frequency and select materials for manufacture on that basis. In some physical models, for example a simple model of a cylindrical rod, the relationship between the resonant frequency $\omega$ of a material and the Young's modulus $Y$ of that material may be approximated to:

$$\omega \propto \sqrt{Y}$$

In some embodiments, the frame 105 of the vehicle 102 may comprise replaceable members with different resonant frequencies, or temporary items of the vehicle 102 may have different resonant frequencies. In some embodiments, a user may be able to manually configure the frequency of the alarm via a device such as the smart device 125. In similar embodiments, the user may be able to select a frequency of the alarm to match a desired resonant frequency peak of the material which forms the portion of the vehicle 102 configured to resonate due to the alarm. Accordingly, in embodiments where the user can select a frequency of the alarm in consideration of the resonant peaks of the material which forms a portion of the vehicle 102, during the manufacture process the material which forms a portion of the vehicle 102 may be selected in consideration of the number and magnitude of resonant peaks of said material. Providing the user with this flexibility in the choice of resonant frequency will be understood to be particularly beneficial, as it may account for the differing environments wherein the vehicle 102 may be stored. For example a loud city centre environment might make appropriate a particularly high pitched resonance frequency of at least a portion of the frame 105 so that the resonant alarm sound stands out in an otherwise noisy environment where pedestrians might not think twice about a perceived loud noise. In embodiments where the material which forms a portion of the vehicle 102 intended to resonate is selected in consideration of its resonant peaks, the material may be selected additionally based on the destructive resonance frequency of the material being beyond a maximum achievable frequency that can be generated by the alarm mechanism 220. In similar embodiments, the alarm circuit 200 components may be selected such that a destructive resonance frequency is not achievable by user configuration. In some embodiments, the user may be limited to select the frequency of the alarm from a discrete spectrum of frequencies. An advantage of limiting the possible configurable frequencies to a discrete spectrum is that the user will not be able to choose a frequency which might be a resonant frequency of a portion of a conducting wire or a housing of the vehicle security system 100. A resonance in one or both of the housing and the conductive wire may generate unwanted noise in any signal transmissions received by or transmitted from the vehicle security system 100. The conducting wire and the housing are best illustrated in Figure 3 of the present disclosure.

Material(s) may also be selected based at least in part on Q-factor, a dimensionless parameter well-known in the relevant literature, which characterises the extent to which a material is damped.

The sensor 210 may be a mercury tilt switch or the like. Alternative sensors such as but not limited to accelerometers, pressure sensors, proximity sensors, displacement sensors etc. may also be used for sensing the predefined variable of the vehicle. In the exemplary embodiment, a mercury tilt switch is a switch which opens and closes an electrical circuit when it is tilted at certain angles. These types of switches are known in the art and it is not intended to describe them further. A power source 230 is provided for powering the alarm circuit 200, although additional one or more further power supplies such as an auxiliary or backup power supply (not shown) may also be included. A controller 240 is configured to facilitate remote control of the alarm circuit 200. The controller 240 is operable to receive instructions wirelessly from a remote controller by way of example. The alarm circuit 200 may also include a tracking mechanism 250 configured for tracking the geographical location of the vehicle 102. In the exemplary embodiment, the tracking mechanism 250 comprises a GPS module. In the exemplary example, the tracking mechanism 250 may be used to activate the alarm such that the alarm is automatically activated when the vehicle 102 is displaced from its original position (in this case for example its GPS co-ordinates), or when the vehicle 102 is moved a displaced certain distance from its original position (this distance could be pre-selected by the bicycle user). In some embodiments, the tracking mechanism 250 may further comprise a SIM card for identifying and authenticating subscribers for a service associated with the exemplary vehicle security system 100. For example, the SIM card might serve to identify and authenticate a user smart device 125 in communication with the vehicle security system 100 for one or more services such as a vehicle location/tracking service.

The controller 240 is communicatively coupled to a communication module 260 for facilitating remote control using the smart device 120. The communication module 260 may be compatible with Bluetooth or the like. The power source 230 may include a battery which may be rechargeable. In the exemplary embodiment the rechargeable battery comprises a rechargeable lithium ion battery, although other configurations and selections are envisaged. In the exemplary embodiment, the power source 230 may comprise a port to facilitate charging of the power source 230. In one embodiment, the port may be any input/output port, such as a USB port or the like. In the exemplary embodiment, the vehicle security system 100 may comprise a housing which accommodates the alarm mechanism 220, the sensor 210, the tracking mechanism 250 and a secondary power source. In such an embodiment, the housing may comprise an orifice disposed on its surface to facilitate access to the port of the power source 230. In the same or similar embodiments, the rechargeable battery may be coupled to a dynamo system for facilitating charging thereof. In the exemplary embodiment, the frame 105 may comprise an orifice disposed on its surface to facilitate access to the port of the power source 230 via the orifice disposed on the housing. In such an embodiment, the orifice disposed on the surface of the frame 105 may be aligned with the orifice disposed on the surface of the housing. In the exemplary embodiment, the orifice disposed on the surface of the frame 105 may have disposed over itself a rubber protection flap to prevent the ingress of particulate matter such as dust, as well as fluids and the like. In another embodiment, the orifice disposed on the surface of the housing may have disposed over itself a rubber protection flap to prevent the ingress of particulate matter such as dust, as well as fluids and the like.

It is known that a continuous enclosure of a conductive material can be used to block electromagnetic fields in a phenomenon which is known as a Faraday cell. As the transmissions emanating from the communication module 260 within the frame 105 of the vehicle 102 are essentially encompassed by a conductive material (such as aluminium, carbon fibre etc.) it will therefore be appreciated by those skilled in the art that under certain circumstances a Faraday shield may be created about the communication module 260. In the preferred embodiment, in order to avoid any restrictions on the wireless transmissions emanating from or passing to the vehicle security system 100 which may be caused by the configuration of the frame 105 of the bicycle 102 within which the vehicle security system 100 is housed (thus creating a Faraday shield), one or more transmitting mechanisms may be incorporated into the configuration in order to overcome this Faraday effect and allow communication from the communication module 260 on the interior volume of the vehicle body to an exterior region of the vehicle body. For further discussion of the transmitting mechanism(s) see Figure 3 and its associated description.

Referring now to Figure 3 there is illustrated an exemplary vehicle security system 300, the same as that of any previous Figure, comprising a housing being made up of first and second sections 305; 310. In the exemplary embodiment, the first section 305 comprises a housing volume 315 for accommodating the alarm mechanism 220, which may include the wireless communication interface; the sensor 210; the tracking mechanism 250; and a secondary rechargeable battery which forms part of the alarm circuit 200 and is distinct from the power source 230. The secondary rechargeable battery may serve the purpose of providing a backup supply of power in the event that the power source 230 fails. As such, the secondary rechargeable battery may be recharged simultaneously with the power source 230 via the port. A user device such as the smart device 125 may be configured to display information received wirelessly from the vehicle security system 100. In some embodiments, the information may include a number of parameters pertaining to the vehicle security system 300 such as but not limited to a current battery status/charge of one or both of the power source 230 and the secondary rechargeable battery, an expected battery life left in units of time and a geographical position of the vehicle security system 100. One or more of these parameters may be calculated by processors positioned on board the vehicle security system 100, for example in the alarm circuit 200. One or more of these parameters may additionally or alternatively be calculated by processors on board the smart device 125. One or more of these parameters may additionally or alternatively be calculated by processors located on remote servers in communication with the smart device 125. In one embodiment, the smart device 125 might make use of Google Maps or a similar third-party location service in conjunction with raw geo-positional data recorded by the tracking mechanism 250 and received by the smart device 125 via wireless communication with the communication module 260 and/or remote servers.

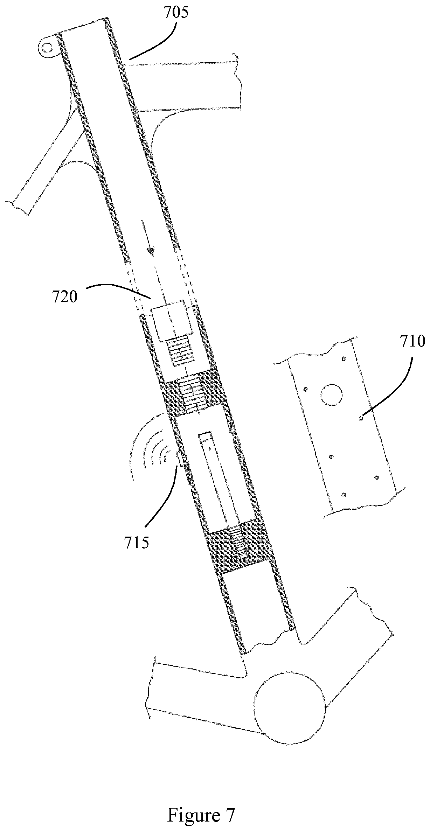

The alarm mechanism 220 may comprise one or more of an audible alarm, a visually perceptible alarm or a mechanical vibratory alarm. The housing may have disposed on its surface one or more apertures formed thereon such that the visually perceptible alarm may be visible externally of the housing. The vehicle 102 may also comprise one or more apertures, best illustrated in Figure 7, on its frame 105.

The housing may comprise a mounting means for mating with the frame 105 of the bicycle 102. The mounting means may include engage-able complimentary formations. In one embodiment, the mounting means comprises a screw 320 for engaging with a threaded portion which was formed on the bicycle frame 105 during the manufacturing process of the bicycle frame 105. The threaded portion on the frame 105 is thus integral to the frame 105. In order to use an identical process for a large number of bicycles 102 or other vehicles, this step could be implemented in a manufacturing process for such vehicles 102 which will eventually comprise a vehicle security system 100 according to the present invention and for vehicles 102 which will not comprise such a system (e.g. for bicycles the threaded portion would simply lie dormant within the frame with no screw engaged in its threads).

The mounting means provides sufficient structural stability to prevent the housing 305 from moving within the saddle supporting member 115 (or other integral member of the frame 105). Preferably the vehicle security system 100 may also be dimensioned to fit snugly within the saddle support member 115 (or another integral member of the frame 105) such that there is no movement within the saddle support member 115 (or other integral member of the frame 105). In a further embodiment the vehicle security system 100 and /or one or both sections 305; 310 of the housing can indeed lend structural support to the integral member within which it is located.

As the frame 105 is largely responsible for providing the strength, rigidity and handling of the bicycle or other similar vehicle, it is vital that any deviations from the standard bicycle manufacturing process (in the exemplary embodiment these comprise a threaded portion configured to engage with a threaded screw 320) which are made to the integral members of the bicycle 102, are made during the manufacturing process where quality control can be strictly monitored as any substantial modification to the frame 105 which occurs after manufacture could cause unforeseen divergence from the intended design and thereby lead to conditions (for example unplanned stresses and strains) within the core structure of the bicycle 102 which are outside the design criteria of the bicycle 102 and thus manifest themselves as problems with the essential performance and safety of the bicycle 102.

In the exemplary embodiment the first section 305 of the housing may comprise an orifice 325 disposed on its surface so as to facilitate extension of the one or more transmitting mechanisms from the housing volume to an interior volume of the vehicle body. In the exemplary embodiment, at least one of the transmitting mechanisms comprises a conducting wire 330 which extends between the interior volume of the vehicle body and the exterior region of the vehicle body thereby facilitating wireless transmission therebetween. In one embodiment, the frame 105 may comprise one or more orifices in the vicinity of the one or more transmitting mechanisms, to facilitate the extension of the one or more transmitting mechanisms from the interior volume of the vehicle body to the exterior region of the vehicle body. In embodiments where there is a plurality of the transmitting mechanisms, at least one of the plurality of the transmitting mechanisms may comprise a non-conducting wire which extends between the interior of the vehicle body and the exterior of the vehicle body. In one embodiment, there may be six transmitting mechanisms with three conducting wires 330 and three non-conducting wires. However, it will be understood that any other number of transmitting mechanisms, conducting wires and non-conducting wires may be chosen and any particular numbers of transmitting mechanisms, conducting wires and non-conducting wires are given by way of example only.

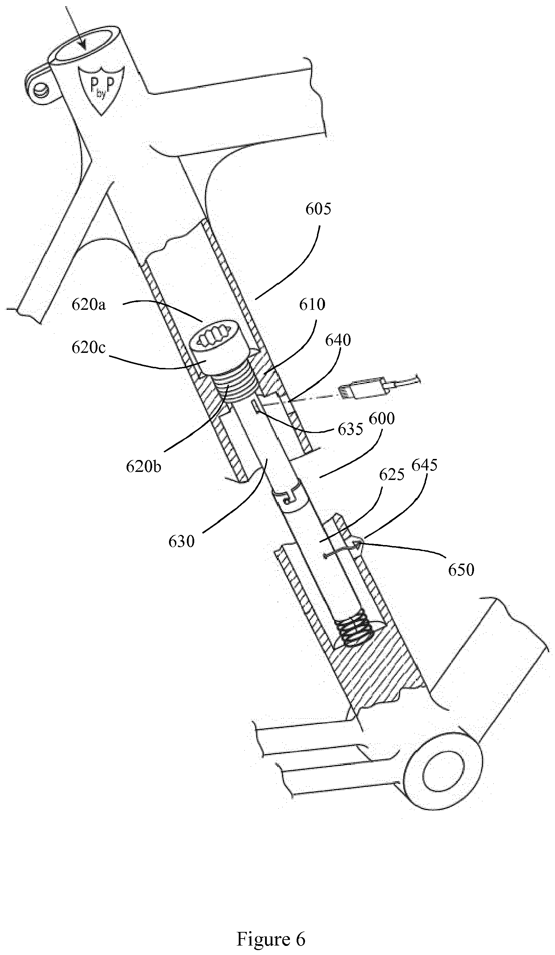

The purpose of one or more transmitting mechanisms having no capability to facilitate wireless communication is to act as a decoy to thieves who, when attempting to steal the vehicle 102, will not be able to distinguish the functional transmitting mechanism(s) from the decoy transmitting mechanism(s). It will be understood that decoys may comprise dummy antennas, dummy wires and the like. The thief will readily recognise that if the wrong transmitting mechanism is cut whilst attempting to disable part of the alarm mechanism's 220 functionality, then the alarm will still be activated upon theft of the vehicle 102. The thief will therefore be required to remove all of the transmitting mechanisms from the vehicle 102 to make certain that the alarm mechanism 220 is disabled, crucially causing significant physical and visually perceptible damage to the vehicle 102 as a result. One configuration which may guarantee that significant damage is done in the process of removing the transmitting mechanisms is for each of the wires - both conducting and non-conducting - to be engaged with a hardened surround (best illustrated in Figure 6) which is integrally formed on or disposed on the surface of the frame 105 of the vehicle 102. Removing these surrounds will lead to a number of visually perceptible perforations on the frame 105 of the vehicle 102. The thief will readily recognise that the vehicle 102 will a) be readily recognisable as having been tampered with and therefore identifiable as stolen property, and b) have lost a significant portion of its monetary value as a result. This solves the problem presented for example in embodiments where having a single, functional transmitting mechanism may be cut by a thief and thus cause the alarm mechanism 220 to lose communication with the vehicle owner's device 125, causing minimal damage in the process.

In alternative embodiments, this problem may be solved by having the conducting wire 330 wrapped with a high-strength material such as Kevlar. In some embodiments, each decoy transmitting mechanism may itself be a trigger for the alarm mechanism 220, which causes the alarm to activate when it is cut. Circuit arrangements for detecting a wire having been cut are well established in the art and it is not intended to describe them here.

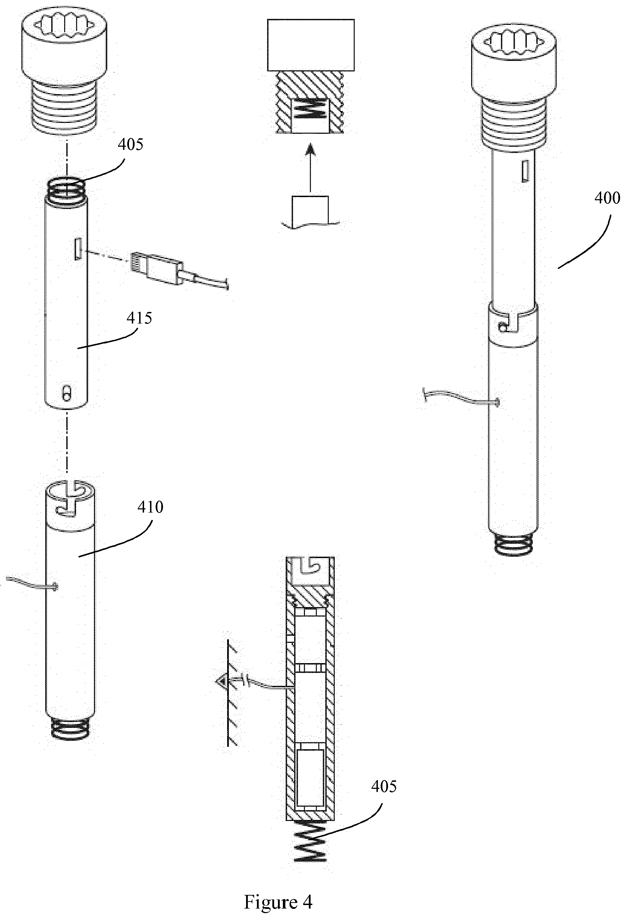

In the exemplary embodiment, each of the one or more transmitting mechanisms comprises an antenna that comprises a fastener with a tensioning mechanism (see Figs. 4-7). In the same embodiment, at least one of the one or more tensioning mechanisms may be a wire coil.

In embodiments where the alarm frequency is configured to be equal to the resonant frequency of at least a portion of the vehicle body, the material which forms the conducting wire 330 may be configured to have a different resonant frequency to the resonant frequency of at least a portion of the vehicle body, to minimise signal noise of a signal being transmitted. Configuring the conducting wire 330 to have a different resonant frequency to a portion of the vehicle body is an advantageous work-around for embodiments in which at least a portion of the vehicle body will be caused to resonate by the alarm. Without such a work-around, there is the possibility of resonance in the transmitting mechanism(s) - this can generate significant signal noise and thus interfere with wireless communications mediated devices by the transmitting mechanism(s) between the vehicle security system 100 and external devices such as the smart device 125. In some embodiments, the one or more transmitting mechanisms are further configured to comprise a damping mechanism (not shown) in cooperation with one or both of the conducting wire 330 and the non-conducting wire and at a least a portion of the vehicle body for damping mechanical vibration therebetween. Such a damping force will act to more quickly minimise the frequency of oscillations of the one or more transmitting mechanisms caused by an audible alarm or the resonant vibrations of at least a portion of the vehicle body, than if there were no damping mechanism. Associating a damping mechanism with the non-conducting wire will further contribute to the effect of providing a decoy to a thief.

In the exemplary embodiment the power source 230 may comprise an electrical contact (not shown) disposed at one of its ends to facilitate electrical coupling with a conducting material in contact with said power source 230. In the same embodiment, the first section may comprise an electrical contact (not shown) disposed at one of its ends to facilitate electrical coupling with the power source 230.

In the exemplary embodiment the second section 310 of the housing may comprise the power source 230, a port for facilitating charging of the power source 230, and an orifice 335 disposed on the surface of said second section 310 to facilitate access to the port of the power source 230.

In embodiments where the frequency of the alarm is configured to be equal to the resonant frequency of at least a portion of the vehicle body, a material which forms at least part of the housing may be configured to have a different resonant frequency to the resonant frequency of at least a portion of the vehicle body, to minimise signal noise of a signal being transmitted. In some embodiments, the interior volume of the vehicle body may be fitted with a damping mechanism such as a material with a high coefficient of friction when in contact with and in motion against the material which forms at least part of the housing.

In the exemplary embodiment, the second section 310 of the housing may comprise an outward extending portion 340a disposed on its exterior surface, and said first section 305 of the housing may comprise an L-shaped slot 340b for accommodating the outward extending portion 340a of said second section 310 to cooperatively form a bayonet mount.

A security mechanism 345 is provided for securing the housing of the vehicle security system 100 within the saddle support member 115 of the frame 105 or within another substantially hollow integral member of the frame 105 such as the down tube or the top tube. In an exemplary embodiment, the security mechanism 345 may be used to permanently secure the housing within the hollow saddle supporting member 115. In a further exemplary embodiment, the security mechanism 345 comprises a lock nut which is mounted within the saddle supporting member 115 beneath the saddle 120 which prevents access to the vehicle security system 100. The lock nut may be of a specialised variety such that it can only be opened with a specific lock nut key or keys. This type of specialised lock nut will restrict access to the vehicle security system 100 such that only persons who have the corresponding lock nut key are able to access the vehicle security system 100, providing an extra layer of protection against the vehicle security system 100 being tampered with or removed maliciously. In the exemplary embodiment, the lock nut may be dimensioned such that it comprises a hollowed-out portion for accommodating a portion of the housing.

Referring now to Figure 4, there is presented a vehicle security system 400 substantially the same as that of the previous Figures, the only difference being that a compression spring fixture 405 replaces the screw 320 and a compression spring fixture 405 is disposed on both the first and second sections 410; 415 of the housing at their far ends. An advantage of the compression spring fixture 405 as an alternative to the screw 320 is that the compression spring fixture 405 may facilitate retro-fitting of the vehicle security system 400 in any vehicle frame 105 with a suitably sized volume, and not just frames with a threaded portion for receiving the screw 320. In some embodiments, one may purchase the vehicle security system 400 for an older bicycle or scooter which has a hollow portion in the saddle supporting member 115 or another member of the frame. Preferably, in such an embodiment purchase of the vehicle security system 400 may also include purchase of the key or keys for the security mechanism 345. However, it is envisaged by the inventor that embodiments of the vehicle security system comprising the screw 320 may be configured for retro-fitting in to a suitably sized volume of any vehicle frame. For example, purchase of the vehicle security system 300 may include purchase of a complimentary threaded portion which may be inserted in to a frame of a vehicle. Such a complimentary threaded portion might comprise a number of ring surrounds which may be fitted in a concentric fashion to the complimentary threaded portion, allowing the complimentary threaded portion to be fitted to frames of various diameters. Moreover, the outer surface of the ring surrounds and the complimentary threaded portion may comprise a material which has a high coefficient of friction when in cooperation with the material which forms the inner surface of at least a portion of the frame, to provide a force opposing the rotational movement of the complimentary threaded portion during insertion/turning of the screw 320. Both the housing and the complimentary threaded portion may be manufactured according to various desired geometries.

In one embodiment, the number of windings of the compression spring fixture 405 disposed on the first section 410 is equal to the number of windings of the compression spring fixture 405 disposed on the second section 415. In an alternative embodiment, the number of windings of the compression spring fixture 405 disposed on the first section 410 is not equal to the number of windings of the compression spring fixture 405 disposed on the second section 415. In some embodiments, the two compression spring fixtures 405 may be made of the same material. In certain embodiments, the two compression spring fixtures 405 may be made of different materials. Spring materials may be selected for example based on desired spring tensions in situ, or based on heat resistance, conductivity and the like. In embodiments where the frequency of the alarm is configured to be equal to the resonant frequency of at least a portion of the vehicle body, a material which forms at least part of the compression spring fixtures 405 may be configured to have a different resonant frequency to the resonant frequency of at least a portion of the vehicle body, to minimise signal noise of a signal being transmitted.

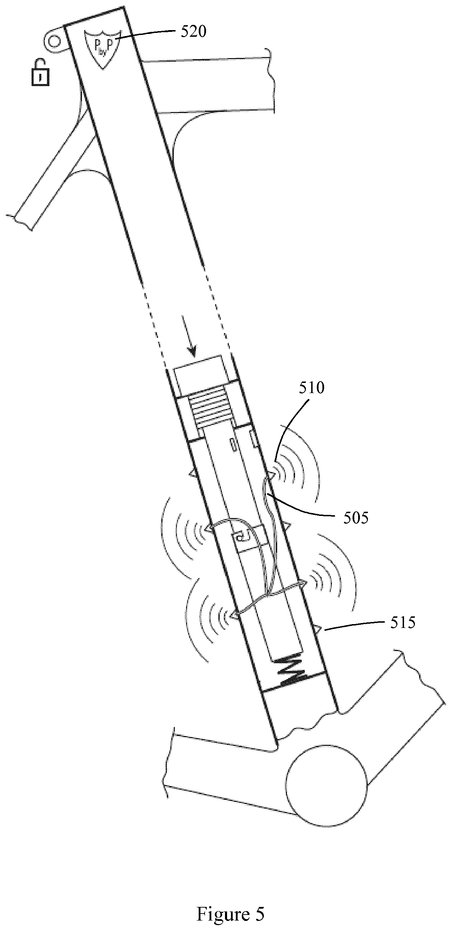

Figure 5 is an illustration of the vehicle security system 500, substantially the same as that of the previous Figures, in situ in an interior volume of the vehicle body. In particular, there is presented an embodiment in which there is a plurality of transmitting mechanisms, as discussed previously. A plurality of conducting wires 505 are engaged with antennas comprising a fastener and a tensioning mechanism 510. Also presented is a plurality of decoy antennas 515 not engaged with any wire at all. In other embodiments, the decoy antennas 515 may be engaged with non-conducting wires. As previously discussed, the thief will recognise that if the wrong transmitting mechanism (i.e. only a decoy transmitting mechanism) is cut whilst attempting to disable part of the alarm mechanism's 220 functionality, then the alarm will still be activated upon the theft of the vehicle. The thief will therefore be required to remove all of the transmitting mechanisms from the vehicle to make certain that the alarm mechanism 220 is disabled, crucially causing significant physical damage to the vehicle in the process. This will cause the vehicle to lose a significant portion of its value at least because it will be readily recognisable as stolen property. This may be further instilled by embossing a design/logo 520 on the frame 105 which indicates that the exemplary vehicle security system 500 is present in the vehicle 102, and therefore the appearance of abrasions, perforations or other intelligible signs of tampering will be immediately associated with the destruction or attempted destruction of the vehicle security system 500 and therefore cause the vehicle to become easily identifiable as stolen and/or damaged property.

Figure 6 is an illustration of a vehicle security system 600, substantially the same as that of any previous Figure, in situ in an interior volume of a vehicle frame 605. In particular, a moulded portion 610 of the frame 605 is visible, said moulded portion 610 having been formed during a manufacture stage. The moulded portion 610 comprises an inward extending portion which extends inwards towards the centre of the interior volume defined by the portion of the frame 605 in which the vehicle security system 600 may be accommodated. The inward extending portion of the moulded portion 610 is dimensioned to define a bottleneck of width equal to the width of the neck 620b of the security mechanism 620a, such that the first and second sections 625; 630 of the housing may pass beyond the moulded portion 610 but the head 620c of the security mechanism 620 is prevented from passing beyond the moulded portion 610. During manufacture, the moulded portion 610 may be positioned along the interior volume of the frame 605 such that the orifice 635 disposed on the surface of the second section 630 for facilitating access to the port may align with the orifice 640 disposed on the surface of the frame 605 for facilitating access to the port. A pictorial example of a cable being directed through between the orifices is presented.

In the exemplary embodiment, each antenna may further comprise a surround 645 with a conductive core 650 engaged with the conducting wire 655. In the exemplary embodiment, the surround 645 is a hardened steel surround and the conductive core 650 is a copper core. It will be understood that a number of materials may be chosen for the manufacture of the surround 645 and the core 650, for example tungsten, platinum, aluminium, brass, iron and so forth. In some embodiments, the surrounds 645 may be of different diameters such that a selection of gripping tools would be required by a thief to try and remove the antennae from the frame 605. In some embodiments, the surrounds 645 may define different surface topologies. In embodiments, each antenna engaged with a non-conducting wire may be engaged with the core 650 and the surround 645. Configuring the surrounds 645 to be of a variety of diameters and/or surface topologies - thus causing a potential thief to possess a variety of gripping tools to extract the surrounds 645 - provides an additional layer of security against tampering with the vehicle security system 600. A thief is substantially less likely to be successful in disabling, damaging or removing part or all of the vehicle security system 600 if they lack the appropriate set of tools to do so.

The surrounds 645 may be configured during manufacture such that any attempt to remove the surrounds by torque or heat or the like will lead to the permanent damage to the frame 605 itself therefore losing value of the stolen vehicle. This may be achieved, for example, by choosing the surrounds 645 to be made of a material with a high melting point. Any attempt to remove the surrounds by heat will therefore only be successful at temperatures which are likely to additionally melt/distort the volume of the frame 605 in the immediate vicinity of the surround 645 being attacked.

Referring now to Figure 7, there is presented a portion of a frame 705 of the exemplary vehicle 102 substantially similar to any previous Figure. In particular there is presented a cut-away portion of the frame 705 depicting an embodiment in which the frame 705 includes a plurality of apertures 710 such that the visually perceptible alarm may be visible externally of the housing (said housing additionally comprising one or more apertures in similar embodiments). Also visible here is an antenna of a transmitting mechanism that comprises a fastener with a tensioning mechanism 715, similar to that of the previous embodiments. As previously discussed, the transmitting mechanisms overcome the Faraday effect caused by the alarm circuit 200 being enclosed in a conducting material, and facilitate communication from the communication module 260 located in the interior volume of the vehicle body to an exterior region of the vehicle body. In some embodiments, the frame 705 may be manufactured from a non-conducting material. The housing and frame apertures may assist in providing a transmission pathway for any transmissions which are emitted from the vehicle security system 600 when it is in an activated mode (such as for example radio frequency signals). The frame and housing apertures are formed during the manufacturing process of the frame 705. In an additional embodiment, the frame apertures 710 are partially or substantially covered (for example, with a material akin to mesh) such that the ingress of water into the frame 705 of the vehicle 102 is prohibited but the egress of transmissions and light from the vehicle security system 600 is enabled. Additionally or alternatively, the housing apertures may be partially or substantially covered (for example, with a material akin to a mesh) such that the ingress of water into the interior of the housing of the vehicle security system 600 is prohibited but the egress of transmissions and light from the vehicle security system 600 is enabled. Such a mesh may prevent the ingress of moisture but allow the ingress of transmissions such as radio frequency signals.

A security mechanism 720, the same as that of any previous Figure, may be inserted from the top of the frame 705 in to an interior volume which the frame 705 defines.

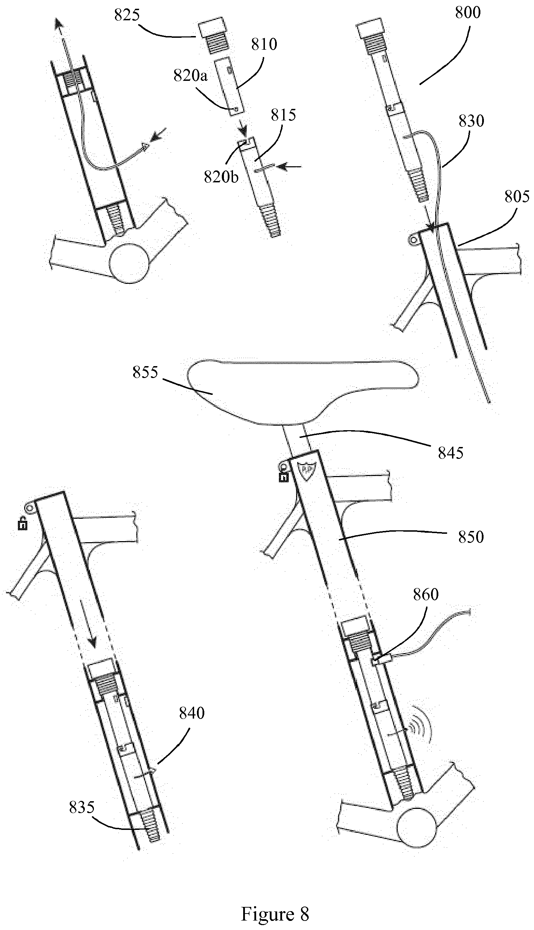

Figure 8 is an illustration of a method of inserting a vehicle security system 800 in to a portion of the vehicle frame 805, the same as that of the previous Figures. It will be understood that components labelled here as 8xx are the same components as in previous Figures, for example the first section 305 of the housing is labelled here as 810. Initially, the first section 810 of the housing is coupled to the second section 815 of the housing and secured by the cooperation of the outward extending portion 820a and the L-shaped slot 820b which together form a bayonet mount. The second section 815 of the housing is then accommodated in the hollowed-out portion of the security mechanism 825. Once the housing is fully assembled, the conducting wire 830 (and in some embodiments any other wires, conducting and/or non-conducting) is fed in to a portion of the frame 805 and the rest of the assembled vehicle security system 800 is subsequently inserted. The mounting means for mating with the frame 805 of the vehicle 102 is then engaged with a complimentary formation formed on the frame 805. In the exemplary embodiment, the mounting means comprises a screw 835 for engaging with a threaded portion which was formed on the vehicle frame 805 during the manufacturing process of the vehicle frame 805. The screw 835 may be engaged with the threaded portion formed on the vehicle frame 805 and the vehicle security system 800 inserted further in to the frame 805 using an appropriately formed tool/key to cooperate with a standard recess formed on the head of the security mechanism 820 which, in the exemplary embodiment, is a lock nut. In one embodiment, driving the vehicle security system 800 via clockwise rotation in to the interior volume of the vehicle body inserts the screw 835 further along the threaded portion formed on the vehicle frame 805.

Once the vehicle security system 800 is properly inserted in the interior volume of the vehicle body, the portion of the conductive wire 830 which is visible externally of the frame 805 may be engaged with a tensioning mechanism 840 which in the exemplary embodiment is the core 650. In this configuration, the conducting wire 830, and preferably the tensioning mechanism 840, together become an antenna for facilitating the transmissions of wireless signals generated by the vehicle security system 800. It will therefore be appreciated by those skilled in the art that wireless transmissions can pass from the interior to the exterior of the vehicle 102 and vice versa. In embodiments where there is a plurality of transmitting mechanisms, the plurality of conducting wires 830 may be fed through a plurality of orifices disposed on the surface of the housing and the frame 805 of the vehicle 102, each conducting wire 830 being engaged with a tensioning mechanism 840. As previously discussed, in certain embodiments where there is a plurality of transmitting mechanisms, at least one transmitting mechanism of the plurality of transmitting mechanisms may comprise a non-conducting wire to act as a decoy to a thief. The non-conducting wire(s) may also be fed through an orifice(s) disposed on the surface of the housing and the frame 805, and may be engaged with a tensioning mechanism 840 so that they cannot be distinguished from the conducting wire(s). Preferably, the surrounds 645 would subsequently be formed/placed on the frame 805.

Finally, an intermediate temporary item 845 is inserted in to the interior volume of the vehicle body defined by the saddle supporting member 850, the frame 805 may be locked, and the saddle 855 may be mounted on the intermediate temporary member 845. Access to the port 860 for charging of the power source 230 and the secondary power source is facilitated via an orifice disposed on the surface of the frame 805 and a parallel aligned orifice disposed on the surface of the housing.

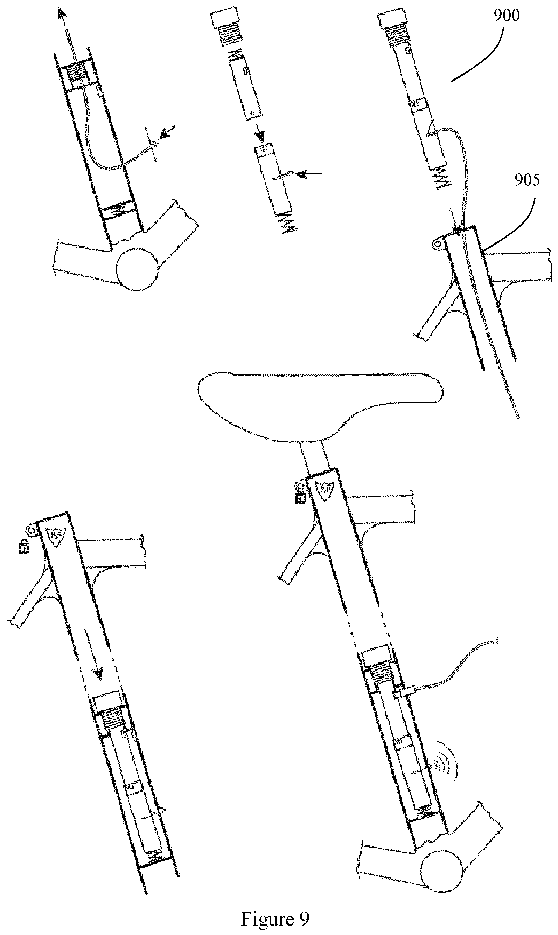

Referring now to Figure 9, there is presented a method of inserting a vehicle security system 900, substantially the same as any previous Figure, in to a portion of the vehicle frame 905. The method of the present Figure 9 is substantially the same as that of Figure 8, only excluding the step of engaging the screw 835 of the mounting means with the threaded portion formed on the vehicle frame 805.

The invention is not limited to the embodiment(s) described herein but can be amended or modified without departing from the scope of the present invention.

It will be understood that while exemplary features of a vehicle security system have been described that such an arrangement is not to be construed as limiting the invention to such features. The method of operating the vehicle security system may be implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s) may be programmed to perform the functions of the method for controlling a vehicle security system. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.).

Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the Figures, should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or subcombinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

## Claims

1. A vehicle security system, comprising:
a sensor for sensing movement of a vehicle from an initial position; the sensor being in communication with an alarm mechanism for activating the alarm mechanism if the vehicle is moved beyond a predetermined threshold; wherein the alarm mechanism is configured to provide a signal at a frequency substantially corresponding to a resonant frequency of at least a portion of the vehicle body.

2. The vehicle security system of claim 1, wherein the vehicle is one of a unicycle, a bicycle, a motorcycle or a scooter.

3. The vehicle security system of claim 1 or 2, being configured to be positioned in an interior volume of the vehicle body.

4. The vehicle security system of any previous claim, further comprising one or more transmitting mechanisms; wherein at least one of the one or more transmitting mechanisms comprises a conducting wire which extends between the interior volume of the vehicle body and an exterior region of the vehicle body thereby facilitating wireless transmission therebetween.

5. The vehicle security system of claim 4, wherein at least one of the one or more transmitting mechanisms comprises:

an antenna that comprises a fastener with a tensioning mechanism; or
an antenna that comprises a fastener with a tensioning mechanism; wherein at least one of the one or more tensioning mechanisms is a wire coil.

6. The vehicle security system of any one of claims 4 or 5, further comprising a plurality of the transmitting mechanisms, wherein at least one transmitting mechanism of the plurality of the transmitting mechanisms comprises a non-conducting wire which extends between the interior of the vehicle body and the exterior of the vehicle body.

7. The vehicle security system of any one of claims 4-6, wherein a material which forms the conducting wire is configured to have a different resonant frequency to the resonant frequency of at least a portion of the vehicle body to minimise signal noise of a signal being transmitted.

8. The vehicle security system of any one of claims 4-7, wherein the one or more transmitting mechanisms are further configured to comprise a damping mechanism in cooperation with one or both of the conducting wire and the non-conducting wire and at least a portion of the vehicle body for damping mechanical vibration therebetween.

9. The security system of any one of claims 4-8, further comprising a communication module for facilitating wireless communication with a remote device, wherein at least one of said one or more transmitting mechanisms is configured to allow communication from the communication module on the interior volume of the vehicle body to the exterior region of the vehicle body.

10. The vehicle security system of any previous claim, the sensor and the alarm mechanism being accommodated in a housing comprising first and second sections;
said first section comprising: a housing volume for accommodating the alarm mechanism, the sensor , a tracking mechanism configured for tracking the geographical location of the vehicle, and a secondary rechargeable battery; at least one orifice disposed on the surface of said first section to facilitate extension of the one or more transmitting mechanisms from said housing volume to the interior volume of the vehicle body, and an electrical contact disposed at one end of said first section to facilitate electrical coupling with a power source; and

said second section comprising: the power source, wherein the power source comprises a port for facilitating charging of the power source; and an orifice disposed on the surface of said second section to facilitate access to the port.

11. The vehicle security system of claim 10, each antenna further comprising at least one surround and at least one conductive core engaged with at least one of the one or more conducting wires and the one or more non-conducting wires; wherein the at least one surround is disposed on the surface of the first section of the housing.

12. The vehicle security system of any one of claims 11, further comprising a plurality of the surrounds wherein at least two surrounds of the plurality of the surrounds have different diameters.

13. The vehicle security system of any one of claims 10-12, wherein a material which forms the housing is configured to have a different resonant frequency to the resonant frequency of at least a portion of the vehicle body to minimise signal noise of a signal being transmitted.

14. The vehicle security system of any one of claims 9-13, wherein the remote device is configurable to select a frequency of a signal provided by the alarm mechanism which is substantially similar to a resonant frequency of at least a portion of the vehicle body.

15. A vehicle comprising a vehicle security system as claimed in any one of claims 1-14.

Figure 1

Figure 2

345

335

340a

340b

325

330

310

300

305

320

315

Figure 3

405

415

410

400

405

Figure 4

Figure 5

Figure 6

Figure 7

Figure 8

Figure 9

Europäisches
Patentamt

European
Patent Office

Office européen
des brevets

## EUROPEAN SEARCH REPORT

Application Number

EP 19 16 4293

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2018/115463 A1 (JOHNSON PATRICK [IE])<br>28 June 2018 (2018-06-28)<br>* abstract; claims; figures 1-11 * | 2-7,9,<br>13,15<br>1<br>8,10-12,<br>14 | INV.<br>B62J3/00<br>B62J99/00 |
| X<br>Y<br>A | US 5 534 847 A (MCGREGOR GERALD C [US])<br>9 July 1996 (1996-07-09)<br>* abstract; claims; figures 1-10 * | 2-7,9,<br>10,13,15<br>1<br>8,11,12,<br>14 | |
| A | WO 2010/092356 A1 (LONDON BICYCLE COMPANY<br>LTD [GB]; RODGERS PAUL [GB])<br>19 August 2010 (2010-08-19)<br>* abstract; claims; figures 1-7 * | 1-15 | |
| A | CN 201 320 999 Y (HUAIAN GOLDEN HENGTAI<br>TECHNOLO [CN]) 7 October 2009 (2009-10-07)<br>* abstract; claims; figure 1 * | 1-15 | TECHNICAL FIELDS<br>SEARCHED (IPC)<br><br>B62J |

The present search report has been drawn up for all claims

| Place of search | Date of completion of the search | Examiner |
|---|---|---|
| The Hague | 30 September 2019 | Szekeres, Gábor |

## ANNEX TO THE EUROPEAN SEARCH REPORT
## ON EUROPEAN PATENT APPLICATION NO.

EP 19 16 4293

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2019

| Patent document cited in search report | | Publication date | Patent family member(s) | | Publication date |
|---|---|---|---|---|---|
| WO 2018115463 | A1 | 28-06-2018 | AU | 2017380096 B2 | 15-08-2019 |
| | | | CA | 3048124 A1 | 28-06-2018 |
| | | | DK | 3383731 T3 | 08-07-2019 |
| | | | EP | 3383731 A1 | 10-10-2018 |
| | | | EP | 3533692 A1 | 04-09-2019 |
| | | | GB | 2558235 A | 11-07-2018 |
| | | | WO | 2018115463 A1 | 28-06-2018 |
| US 5534847 | A | 09-07-1996 | NONE | | |
| WO 2010092356 | A1 | 19-08-2010 | EP | 2429884 A1 | 21-03-2012 |
| | | | GB | 2469978 A | 03-11-2010 |
| | | | WO | 2010092356 A1 | 19-08-2010 |
| CN 201320999 | Y | 07-10-2009 | NONE | | |

EPO FORM P0459

For more details about this annex : see Official Journal of the European Patent Office, No. 12/82